# EUROPEAN PATENT APPLICATION

(11) **EP 4 431 974 A1**
(43) Date of publication of application: **18.09.2024**
(21) Application number: 23162030.3
(22) Date of filing: 15.03.2023
(51) Int. Cl.: G01S 7/41, G01S 13/42, G01S 13/86, G01S 13/931, G01S 17/42, G01S 17/86, G01S 17/931

(54) **GENERATING REPRESENTATION OF A SURROUNDING ENVIRONMENT OF A VEHICLE**

(71) Applicant: Zenseact AB, 417 56 Gothenburg (SE)
(72) Inventor: JOHNANDER, Joakim, 587 37 Linköping (SE); PETERSSON, Christoffer, 426 58 Västra Frölunda (SE); TONDERSKI, Adam, 426 53 Västra Frölunda (SE)
(74) Representative: Zacco Sweden AB

(57) **Abstract**

The present disclosure relates to a method, system, a vehicle, a computer-readable storage medium, and a computer program product. The method comprises obtaining sensor data from a plurality of vehicle-mounted sensor devices, the sensor data of each sensor device comprising one or more sensor data points corresponding to at least one sensor-specific measurement performed by that sensor device at a respective operating frequency. The method further comprises providing the obtained sensor data as input data to a neural network algorithm at a runtime of the neural network algorithm. The method further comprises encoding each sensor data point to a corresponding encoded sensor data point and assigning a header timestamp to each encoded sensor data point. The method further comprises generating one or more prediction outputs representative of the surrounding environment of the vehicle.

## Description

### TECHNICAL FIELD

The present disclosure relates to methods and systems for generating a representation of a surrounding environment of a vehicle. More specifically, embodiments and aspects of the present disclosure relate to generating representation of the surrounding environment of the vehicle by means of a neural network algorithm based on sensor data obtained by the vehicle-mounted sensor devices.

### BACKGROUND

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a vehicle driver while driving. Today, there is ongoing research and development within a number of technical areas associated to both the ADAS and the Autonomous Driving (AD) field. ADAS and AD will herein be referred to under the common term Automated Driving System (ADS) corresponding to all of the different levels of automation as for example defined by the SAE J3016 levels (0 - 5) of driving automation, and in particular for level 4 and 5.

An ADS may be construed as a complex combination of various components that can be defined as systems where perception, decision making, and operation of the vehicle are performed by electronics and machinery instead of or in tandem with a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

It is imperative for autonomous and semi-autonomous vehicles to have a detailed understanding of the surrounding environment of the vehicle. The conventional approaches require all the sensor systems of the vehicle to operate under a synchronized scheme to be able to use the sensor data from various sensor devices. This in turn may lead to information gaps introduced due to such synchronization efforts.

There is thus a pressing need in the art for new and improved solutions for identification of objects and scenarios in the surrounding environment of the vehicle with high accuracy and speed.

### SUMMARY

It is therefore an object of the present disclosure to provide a system, a vehicle comprising such a system, a method, a computer program product and a computer-readable storage medium, which alleviate all or at least some of the drawbacks of presently known solutions.

More specifically, it is an object of the present disclosure to alleviate problems related to identification of objects and scenarios in the surrounding environment of the vehicle with high accuracy and speed.

These objects are achieved by means a system, a vehicle comprising such a system, a method, a computer program product and a computer-readable storage medium, as defined in the appended independent claims. The term exemplary is in the present context to be understood as serving as an instance, example or illustration.

According to a first aspect of the present disclosure, there is provided a method. The computer-implemented method is presented for obtaining a representation of a surrounding environment of a vehicle. The method comprises obtaining sensor data from a plurality of vehicle-mounted sensor devices. The sensor data of each sensor device comprises one or more sensor data points corresponding to at least one sensor-specific measurement performed by that sensor device at a respective operating frequency. The method further comprises associating each sensor data point with a respective capture time label. Further, the method comprises providing the obtained sensor data as input data to a neural network algorithm at a runtime of the neural network algorithm. The neural network algorithm is configured for encoding each sensor data point to a corresponding encoded sensor data point. Further, the neural network algorithm is configured for assigning a header timestamp to each encoded sensor data point, thus generating a timestamped encoded sensor data. The assigned header timestamp for a sensor data point is determined based on the capture time label of that sensor data point relative to a current runtime of the neural network algorithm at which the input data is provided to the neural network algorithm. The method further comprises generating, by means of the neural network algorithm and based on the timestamped encoded sensor data, one or more prediction outputs representative of the surrounding environment of the vehicle.

When it comes to vehicles having autonomous and/or semi-autonomous functionalities, an accurate identification of traffic objects and traffic scenarios in the surrounding environment of the vehicle traveling on a road is of great importance in order to make safe decisions without endangering a vehicle's occupants or external objects. Usually, it is the sensor system of the vehicle which is responsible for obtaining the mentioned representations of objects and scenarios.

The present inventors have realized that one major challenge with different sensor modalities of different sensor devices is that they are not synchronized, e.g. have different operational frequencies as mentioned above. This imposes several constraint when it comes to implementing perception, control and/or control algorithms making use of the sensor data generated by the various sensor devices. Conventionally, one approach to address this issue is to enforce a sensor synchronization on the obtained sensor data from different sensor devices. For instance, a cameras is triggered only when a rotating Lidar sensor passes the center of that camera's field-of-view. This implies that the Lidar sensor would eventually dictate a common, and synchronized working frequency of the full sensor system. However, one major drawback of the synchronized system with the imposed synchronization on the various sensor devices is that some sensor devices will be prevented from obtaining measurements and new sensor data at their respective maximal operational frequency. For safety-critical applications such as autonomous driving functions, where it is crucial for the planning and control algorithms to have access to the most accurate and precise representation of the surrounding environment of the vehicle, such limitations lead to critical information gaps with many negative implications. Moreover, the conventional approach does not account for the temporal characteristics of all the sensor data points, e.g. whether the Lidar sensor data points in a single sweep were obtained at different time points during the sweep. Moreover, even though it may be feasible to synchronize some of the sensor devices such as cameras and Lidars, many other sensor devices may not be as easily synchronized.

The present inventors hence have devised the inventive methods and systems for enabling neural network algorithms to process non-synchronized or otherwise referred to as asynchronous sensor data. This way, each sensor device is enabled to obtain measurements and provide sensor data of one or more scenarios at its maximum operational frequency, while taking into account the temporal profile of each sensor data point.

The versatility of the proposed solutions herein enables the methods, and corresponding system and vehicle to be readily adaptable for varying traffic situations and road conditions by obtaining a highly accurate representation of the surrounding environment of the vehicle. This in turn leads to augmented safety on roads.

According to some embodiments, the plurality of vehicle-mounted sensor devices may comprise any one of at least one camera, at least one LIDAR, at least one radar, at least one accelerometer or gyroscope, at least one microphone, at least one Global Navigation Satellite System, GNSS, sensor, or at least one ultrasonic sensor.

In several embodiments, the respective operating frequency for each sensor device may be a maximum operating frequency of that sensor device and the capture time of at least one sensor data point of at least one sensor device of the plurality of sensor devices may be asynchronous with the capture time of at least one sensor data point of at least one other sensor device.

In several embodiments, the method may further comprise obtaining map data associated with the surrounding environment of the vehicle. The method may further comprise obtaining positioning data indicative of a pose of the vehicle. The map and/or the positioning data may comprise one or more map and/or positioning data points respectively, wherein each map and/or positioning data point may have a respective acquisition time label. In several embodiments, the method may further comprise associating the map and/or positioning data points with respective acquisition time labels.

In some embodiments, the method may further comprise providing the obtained map and/or positioning data as input data to the neural network algorithm at the runtime of the neural network algorithm. The neural network algorithm may further be configured for encoding each map and/or positioning data point to a corresponding encoded map and/or positioning data point. The neural network algorithm may further be configured for assigning a header timestamp to each encoded map and/or positioning data point, and further configured for including the encoded map and/or positioning data points having an assigned timestamp in the generated timestamped encoded sensor data. The timestamped encoded map and/or position data may in some embodiments be employed separately from the timestamped encoded sensor data.

In several embodiments, the at least one sensor-specific measurement may correspond to at least one captured image of the surrounding environment of the vehicle, wherein each encoded sensor data point of the at least one image may comprises a positional encoding. The neural network algorithm may further be configured for associating the header timestamp of each encoded sensor data point with the positional encoding of the encoded sensor data point.

In several embodiments, the neural network algorithm may comprise a transformer neural network algorithm.

According to a second aspect of the present disclosure there is provided a (non-transitory) computer-readable storage medium comprising instructions which, when executed by one or more processors of a computing device of a vehicle comprising a plurality of vehicle-mounted sensor devices, causes the computing device to carry out the method according to any one of the embodiments of the method disclosed herein.

According to a third aspect of the present disclosure, there is provided a computer program product comprising instructions which, when the program is executed by one or more processors of a computing device of a vehicle comprising a plurality of vehicle-mounted sensor devices, causes the computing device to carry out the method according to any one of the embodiments of the method disclosed herein.

According to a further fourth aspect, there is provided a system for obtaining a representation of a surrounding environment of a vehicle. The system comprises processing circuitry configured for obtaining sensor data from a plurality of vehicle-mounted sensor devices, the sensor data of each sensor device comprising one or more sensor data points corresponding to at least one sensor-specific measurement performed by that sensor device at a respective operating frequency. The processing circuitry is further configured for associating each obtained sensor data point with a respective capture time label and providing the obtained sensor data as input data to a neural network algorithm at a runtime of the neural network algorithm. The processing circuitry is further configured for, by means of the neural network algorithm, encoding each sensor data point to a corresponding encoded sensor data point. The processing circuitry is further configured for, by means of the neural network algorithm, assigning a header timestamp to each encoded sensor data point, thus generating a timestamped encoded sensor data. The assigned header timestamp may be determined based on the capture time label of that sensor data point relative to a current runtime of the neural network algorithm at which the input data is provided to the neural network algorithm. The processing circuitry is further configured for generating, by means of the neural network algorithm and based on the timestamped encoded sensor data, one or more prediction outputs representative of the surrounding environment of the vehicle.

According to yet another fifth aspect, there is provided a vehicle comprising one or more vehicle-mounted sensors configured to monitor a surrounding environment of the vehicle. The vehicle may further comprise a localization system configured to monitor a pose of the vehicle i.e. geographical position and heading of the vehicle on a road. The vehicle further comprises a system according to the fourth aspect and various embodiments of the fourth aspect. The vehicle may further comprise an ADS system for controlling one or more of acceleration, steering, and braking of the vehicle.

Further embodiments of the different aspects are defined in the dependent claims.

It is to be noted that all the embodiments, elements, features and advantages associated with the first aspect also analogously apply to the second, third, fourth and the fifth aspects of the present disclosure.

These and other features and advantages of the present disclosure will in the following be further clarified in the following detailed description.

### BRIEF DESCRIPTION OF THE DRAWINGS

Further objects, features and advantages of embodiments of the disclosure will appear from the following detailed description, reference being made to the accompanying drawings. The drawings are not to scale.
Fig. 1 illustrates a schematic top view of a road and at least one vehicle traveling on the road in accordance with several embodiments of the present disclosure.
Fig. 2 shows a schematic block diagram of a neural network algorithm in accordance with several embodiments of the present disclosure.
Fig. 3 is a schematic flowchart illustrating a method in accordance with several embodiments of the present disclosure.
Fig. 4 shows a schematic side view illustration of the vehicle comprising the control system in accordance with some embodiments of the present disclosure.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components. Even though the following disclosure mainly discusses vehicles in the form of cars, the skilled reader readily realizes that the teachings discussed herein are applicable to other forms of vehicles such as trucks, buses or construction equipment.

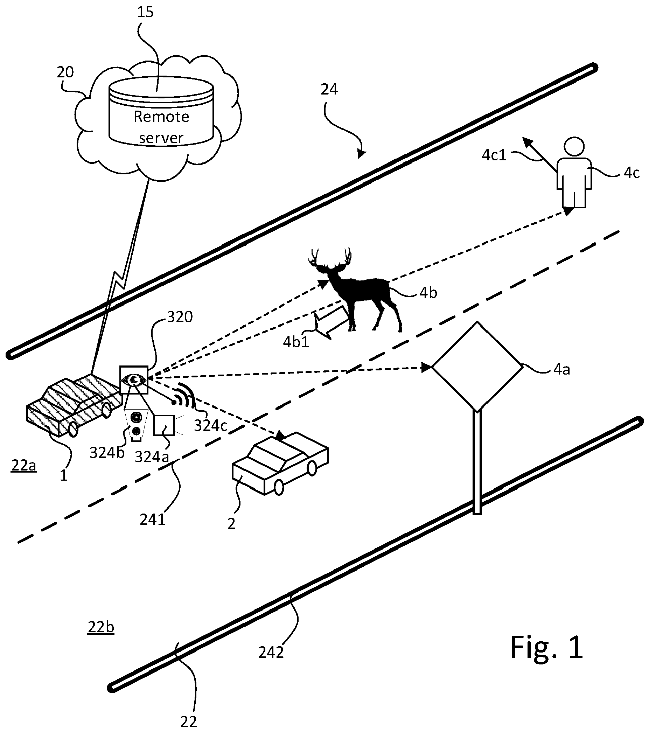

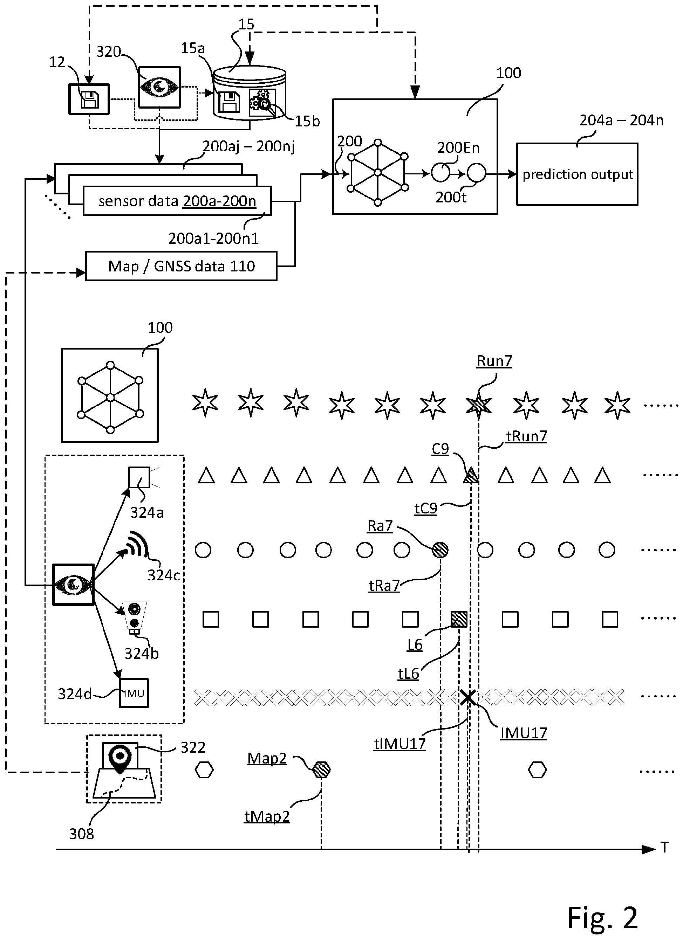

Fig. 1 illustrates a vehicle 1 in a hatched line shaded pattern traveling on a portion 24 of a road 22. Moreover, Fig. 1 shows at least one external vehicle 2 traveling on the same portion 24 of a road 22 as the vehicle 1. The vehicle 1 in several embodiments and aspects comprise a sensor system 320 configured for detecting various scenarios which may occur in the surrounding environment of vehicle 1. The sensor system 320 is configured for collection of information about the surrounding environment of the vehicle 1. The surrounding environment of the vehicle can be understood as a general area around the vehicle 1 in which scenarios comprising objects (such as other vehicles, landmarks, obstacles, etc.) or scenes and event may be detected and identified by vehicle sensors (e.g. radar, LIDAR, cameras, sonar etc.), i.e. within a sensor range of the vehicle. In several embodiments and aspects, the sensor data comprising information about the surrounding environment of the vehicles may be utilized to generate data samples and data classifications for forming input data for a neural network algorithm 100 as explained further with reference to Fig. 2. The sensor data may also be used for training, testing or implementation of neural network algorithms. In Fig. 1, by way of example it is shown that the sensor system 320 of vehicle 1 comprises one or more camera sensor devices 324a, one or more LIDAR sensor devices 324b and/or one or more radar sensor devices 324c.

In several aspects and embodiments, the vehicle 1 may comprise an Automated Driving System (ADS). In the present context, the ADS comprises both ADAS and AD systems. In some embodiments, the ADS of the vehicle may comprise one or more ADS features that are preferably a level 2 feature or higher according to SAE J3016 levels of driving automation for on-road vehicles. In the present context, an ADS feature may be in the form of an autopilot feature, a traffic jam pilot, a highway pilot, or any other SAE J3016 level 2+ ADS feature.

The vehicle 1 comprises a control system 10 or otherwise referred to as the control apparatus 10, which may be a separate entity, or may be a part of the overall ADS architecture of the vehicle, and may accordingly be a module or component of the ADS. The control system 10 of the vehicle 1 comprises control circuitry 11 or otherwise referred to as processing circuitry 11 configured to obtain data comprising information about the surrounding environment of the vehicle 1. As mentioned earlier, the information and data of the surrounding environment of the vehicle 1 may be obtained from the sensor system 320 of the vehicle. In some embodiments and examples, the sensor data may at least partly be obtained in real time from the sensor system 320. In some exemplary embodiments, the sensor data may be historical sensor data. The historical sensor data may at least partly be obtained in scheduled time intervals e.g. from the memory unit 12. Additionally or alternatively, the historical data may be data captured by the sensor system 320 and stored at least partly in the data storage 15a of the server 15. The sensor system 320 of vehicle 1 may in various aspects and embodiments may comprise or be associated with an Inertial Measurement Unit (IMU). An IMU may be understood as a device configured to detect linear acceleration using one or more accelerometers and rotational rate using one or more gyroscopes. Thus, in some embodiments, the sensor data may be in the form of sensor data obtained from the IMU. The output from the IMU is then used to estimate a change in the vehicle's pose over time.

The control system 10 may comprise or be associated with HD-map data 308. An HD-map is in the present context to be understood as map comprising data with highly accurate and realistic representations of the road travelled upon by the vehicle 1. In more detail, HD-maps may be understood as maps that are particularly built for autonomous driving purposes. These maps have an extremely high precision, oftentimes at a centimeter-level. Moreover, the maps generally contain information such as where the lanes are, where the road boundaries are, where the curves are, how high the curves are, and so forth.

The control system 10 of vehicle 1 may be configured to determine a geographical position and heading of the vehicle on the road portion 24 based on data from a localization system comprising positioning data indicating a pose, i.e. position and orientation, of the vehicle on the road portion 24, map data 308 associated with the road portion 24 and sensor data obtained by the from a perception system i.e. sensor system 320 of the vehicle 1. In several embodiments, the vehicle may utilize a localization system in the form of a suitable satellite based positioning systems, such as a Global Navigation Satellite System (GNSS) module 322 (such as a GPS) comprised in the sensor system 320 and configured to collect geographical position data of the vehicle 1.

The obtained sensor data may comprise information about at least one static or moving object in the surrounding environment of the vehicle. As depicted in Fig. 1, there is at least one object 2, 4a, 4b, 4c present in the surrounding environment of the vehicle 1 on the road portion 24. The at least one object 4a, 4b, 4c may be a traffic object 4a such a traffic sign or signal such as traffic lights or warning signs, etc. or in some embodiments may include wild life or various species of animals 4b, pedestrians 4c, external vehicles 2, road barriers, lane markers 241, 242 etc. The at least one object may be intentionally arranged such as the traffic object 4a or may be present on the road 22 at certain occasions such as the pedestrian 4c or the animal 4b crossing the road 22.

In several aspects and embodiments, the sensor data may comprise one or more images of the surrounding environment of the vehicle being captured by a vehicle-mounted camera 324a as a part of the sensor system 320. The camera in the present context also includes a plurality of vehicle-mounted cameras mounted on several parts of the vehicle 1 for capturing images of a surrounding environment of the vehicle. Furthermore, the sensor data may comprise Lidar 324b or radar 324c observations of the surrounding environment of the vehicle 1. The obtained sensor data may additionally comprise information about any one of a state of one or more other external vehicles 2 in the surrounding environment of the vehicle 1. Further, the obtained sensor data may comprise information about any one of vehicle speed and/or pose, lane marker 241, 242 geometry on the one or more lanes of the road 22, lane marker type (e.g. solid, dashed, double marker, etc.) on the road 22, traffic sign information 4a, road barrier information, such as presence or characteristics of speed bumps, or any other road obstruction objects, etc.

The captured sensor data comprising one or more images and/or LIDAR and/or radar and/or IMU data may be stored locally in a memory 12 of the vehicle 1 and/or be transmitted to an external network 20 such as a cloud network 20, or to a remote server 15 with which the vehicle 1 is in communication. The sensor data may be stored in a memory 15a of the remote server 15.

In several examples and embodiments, the road 22 may be any type of road e.g. part of a motorway, freeway or expressway. The road may also be a country road, rural road or any other carriageway. The road may have a plurality of lanes such as more than one lane in the same travelling direction e.g. two or more lanes 22a, 22b or at least one lane in each travelling direction as is usually the case for rural roads. The road 22 has two lanes 22a and 22b extending in the same direction in this example. The lanes 22a, 22b may comprise lane markers 241, 242 of different types e.g. lane marker 241 showing dashed lane marker type and the lane marker 242 showing solid lane marker type.

The control system 10 of the vehicle 1 may accordingly be configured to register scenarios occurring in the surrounding environment of the vehicle 1. The scenarios in some embodiments may correspond to a scene, or an event, or an incident, which may occur in the surrounding environment of the vehicles. In some embodiments, a scenario may be determining a presence of at least one object 2, 4a, 4b, 4c in the surrounding environment of the vehicle 1 based on the obtained sensor data.

Generally, scenario in the present context comprises any one of observing an event or observing an object in the surrounding environment of the vehicle. The object may be any type of object present on the road examples of which may include traffic objects, debris, construction materials, different vegetation, fallen trees, other vehicles, roadside obstacles, etc. The object may comprise a traffic object such as a traffic sign or signal such as traffic lights or warning signs, etc. Needless to mention that the depicted scenarios comprising objects, events, incidents and scenes in Fig. 1 are simply there to elucidate the functionalities and implementations of the systems and methods disclosed herein. The skilled person understands that many other arising situations and scenarios may be comprised in different embodiments and aspects and equally considered for the purposes of the present disclosure.

In Fig. 1, determination of presence of the traffic object 4a, the pedestrian 4c or the animal 4b may correspond to various scenarios occurring in the surrounding environment of the vehicle 1. Furthermore, the pedestrian 4c crossing the road 22 in the direction of arrow 4c1, and/or the animal 4b moving towards vehicle 1 in the direction of arrow 4b1, and/or a driving behavior of the external vehicles 2, also constitute a variety of scenarios in the surrounding environment of the vehicle 1. The events and scenarios may occur at certain time points, and on certain geographical locations and be registered by various sensors of the sensor system 320 accordingly. Each sensor device such as the cameras 324a, the Lidar 324b or the radar 324c performs the data acquisition at its respective operating frequency. Typically, the operational frequency of different sensor devices i.e. either being of the same type or of different types may differ from the other sensor devices. For instance, different types of vehicle-mounted cameras may have different operation frequencies. Similarly, a camera sensor usually has a different operational frequency than a Lidar or IMU sensor and so forth. The IMU sensors may comprise at least one accelerometer or gyroscope sensors. Each sensor device may accordingly have a maximum operating frequency indicating the maximum data acquisition frequency of that sensor device.

The present inventors have realized that one major challenge with different sensor modalities of different sensor devices is that they are not synchronized, e.g. have different operational frequencies as mentioned above. This imposes several constraint when it comes to implementing perception, control and/or control algorithms making use of the sensor data generated by the various sensor devices. Conventionally, one approach to address this issue is to enforce a sensor synchronization on the obtained sensor data from different sensor devices. For instance, a cameras is triggered only when a rotating Lidar sensor passes the center of that camera's field-of-view. This implies that the Lidar sensor would eventually dictate a common, and synchronized working frequency of the full sensor system. However, one major drawback of the synchronized system with the imposed synchronization on the various sensor devices is that some sensor devices will be prevented from obtaining measurements and new sensor data at their respective maximal operational frequency. For safety-critical applications such as autonomous driving functions, where it is crucial for the planning and control algorithms to have access to the most accurate and precise representation of the surrounding environment of the vehicle, such limitations lead to critical information gaps with many negative implications. Moreover, the conventional approach does not account for the temporal characteristics of all the sensor data points, e.g. whether the Lidar sensor data points in a single sweep were obtained at different time points during the sweep. Moreover, even though it may be feasible to synchronize some of the sensor devices such as cameras and Lidars, many other sensor devices may not be as easily synchronized.

The present inventors hence have devised the inventive methods and systems for enabling neural network algorithms to process non-synchronized or otherwise referred to as asynchronous sensor data.

This way, each sensor device is enabled to obtain measurements and provide sensor data of one or more scenarios at its maximum operational frequency, while taking into account the temporal profile of each sensor data point.

Fig. 2 illustrates a schematic block diagram of a neural network algorithm 100 in accordance with several embodiments. The neural network algorithm 100 may be obtained from the server 15 or a log file, memory or data storage 15a of the server 15. The neural network algorithm 100 may have been previously trained with a training data set and stored in the data storage 15a for subsequent execution. In some embodiments, the neural network algorithm 100 may be stored in the memory of the vehicle 1 and be obtained from the memory 12. In several embodiments, the neural network algorithm 100 may be continuously and repeatedly trained with updated training data. The training data may be obtained and curated based on various data collection and classification approaches. The training data may be obtained from the server 15, and may be formed based on the information of the surrounding environment of the vehicle. In several embodiments and aspects, the training data may at least partly be formed based on sensor data obtained by the sensor system 320 of the vehicle 1. The sensor data may comprise related information and be representative of a variety of scenarios which may occur in the surrounding environment of the vehicle 1. The sensor data may be transmitted to the server 15 or may be stored in a memory 12 of the vehicle 1 for future transmission to the server 15 and/or for local utilization in the vehicle 1.

Various aspects and embodiments of the presented technology, and the corresponding systems and methods may be implemented and executed by means of processing circuitry comprising one or more processors. The processing circuitry may at least partly be comprised in a control system 15b or apparatus 15b implemented in the data center 15 or server 15. In some embodiments and aspects, the control system 10 or apparatus 10 of the vehicle 1 may be configured to perform the action and functions described herein.

The proposed data-driven approach of the present disclosure provides a flexible, cost-efficient, and rapid approach for generating an accurate representation of the surrounding environment of the vehicle by means of the neural network and machine learning (ML) algorithms. This enables utilizing the maximum capacity and operational frequency of various vehicle-mounted sensor devices for obtaining sensor data of a large variety of scenarios.

In several aspects and embodiments, sensor data representative of one or more scenarios, in the surrounding environment of the vehicle 1 is obtained from a plurality of vehicle-mounted sensor devices e.g. 324a - 324d as explained earlier. The scenario is observed by at least two sensor devices 324a - 324d comprised in the sensor system 320 of the vehicle 1. Accordingly, assuming for *"*n*"* vehicle-mounted sensor devices, each sensor device 324a - 324n may be associated with its own sensor data 200a - 200n. Each sensor data 200a - 200n may comprise one or more sensor data points, e.g., 200a1-200aj, 200b1 - 200bj, .... , 200n1 - 200nj, wherein *"*j*"* is a real number simply used for indicating one or more sensor data points being comprised in each respective sensor data. The sensor data points correspond to at least one sensor-specific measurement performed by each sensor device at a respective operating frequency. This way each sensor device is enabled to generate sensor measurements and corresponding sensor data points (also referred to as sensor data samples) at its maximal operational frequency. Each sensor data point 200a1 - 200aj, 200b1 - 200bj, .... , 200n1- 200nj of the sensor data associated with each sensor devices is associated with a respective capture time label. This way a time of capture of each sensor data sample of the sensor data is recorded and assigned to that sensor data sample.

In several aspects and embodiments, input data 200 is formed based on the obtained sensor data 200a - 200n and provided to the neural network algorithm 100. The input data 200 is provided at a runtime of the neural network algorithm 100. The neural network algorithm may run contentiously or at discrete one or more run times. The provided sensor data 200a - 200n may be the sensor data of the most recent sensor measurements from each sensor device. In some embodiments, the sensor data 200a may additionally include historical sensor data of respective sensor devices. The neural network algorithm 100 is configured for encoding each sensor data point 200a1 - 200aj, 200b1 - 200bj, .... , 200n1 - 200nj to a corresponding encoded sensor data point, which is shown with the collective reference 200En in Fig. 2 for the entire input data 200 for simplicity. The neural network algorithm 100 is further configured for assigning a header timestamp to each encoded sensor data point and thus generating a timestamped encoded data, shown with the collective reference 200t for the entire input data 200 for simplicity. In several aspects and embodiments, the assigned header timestamp 200t is determined based on the capture time label of that sensor data point relative to a current runtime of the neural network algorithm 100 at which the input data 200 is provided to the neural network algorithm 100. Accordingly, by means of the neural network algorithm 100 and based on the timestamped encoded data 200t, one or more prediction outputs 204a - 204n representative of the surrounding environment of the vehicle is generated. In several embodiments, the capture time of at least one sensor data point of at least one sensor device of the plurality of sensor devices may be asynchronous with the capture time of at least one sensor data point of at least one other sensor device.

In several aspects and embodiments, map data 308 associated with the surrounding environment of the vehicle and/or positioning data indicative of a pose of the vehicle may be obtained. The map and/or the positioning data may similarly comprise one or more map and/or positioning data points respectively, wherein each map and/or positioning data point also has a respective acquisition time label. The positioning data may be acquired by a GNSS sensor device or module 322. The GNSS module 322 may be comprised in the sensor system 324 of the vehicle 1 or may be a separate entity. Similar to the sensor data 200a - 200n, the obtained map and/or positioning data may be provided as input data, collectively referenced as map/GNSS data 110 in Fig. 2, to the neural network algorithm 100 at the runtime of the neural network algorithm 100. The neural network algorithm 100 may be further configured for encoding each map and/or positioning data point to a corresponding encoded map and/or positioning data point. Further, the neural network algorithm may be further configured for assigning a header timestamp to each encoded map and/or positioning data point, and further configured for including the encoded map and/or positioning data points having an assigned timestamp in the generated timestamped encoded sensor data. In several aspects and embodiments, the assigned header timestamp may be determined based on the acquisition time label of that map and/or GNSS data point relative to the current runtime of the neural network algorithm at which the input data is provided to the neural network algorithm.

An example is provided in Fig. 2 for further elucidating the presented technology. Four sensor devices including at least one camera 324a, at least one Lidar 324b, at least one radar 324c are configured to obtained sensor data representative of the surrounding environment of the vehicle 1. The IMU 324d is configured for obtaining and estimating changes in the vehicle's pose over time. Map data 308 and GNSS data may also be obtained. Each sensor device is running at its maximum operational frequency and asynchronous sensor data is generated. Each sensor and/or map and/or GNSS data point has its respective time of capture and time of acquisition recorded. The camera sensor 324a is shown to capture measurements in time, wherein each camera measurement is depicted with a triangle symbol extending along the time axis "T". For instance, the hatched triangle C9 is a camera measurement, which may correspond to one or more camera data points. Each image data point has its corresponding time label. For instance, assuming that the measurement C9 is a single data point, it will have a corresponding time of capture tC9 and so forth. Similarly, the radar sensor 324c is configured for performing measurements in time, depicted by the circle symbols. The hatched circle shows a radar measurement Ra7 having a time label tRa7. The Lidar sensor 324b is configured for performing respective measurements in time, depicted by the square symbols. Similarly, the hatched square shows a Lidar measurement L6 having a time label tL6 at which the measurement is captured and recorded. Crosses show the performed measurements by the IMU 324d in time. The cross IMU17 has a corresponding time label tIMU17. Map data is acquired and is shown by hexagonal symbols and e.g. a shaded hexagon Map2 is associated with its corresponding acquisition time label tMap2. The neural network algorithm 100 has one or more runtimes depicted by star symbols such as runtime Run7 which has a corresponding timestamp tRun7 and in this example is the current runtime of the neural network algorithm at which the input data 200 is provided to the neural network algorithm 100. The sensor data of the most recent sensor measurements C9, Ra7, L6, IMU17 from each respective sensor device 324a, 324c, 324b, 324d as well as the most recent map data acquisition Map2 are provided as input data to the neural network algorithm 100. It should be appreciated that since the proposed technology enables the data acquisition at the maximum operational frequency of each sensor device, it may obtain the sensor and/or map data as they are captured by the respective sensor device and made available to the neural network algorithm 100. Consequently, the neural network algorithm 100 may only obtain the available sensor and/or map data from some of the sensor devices at its current runtime without waiting for all the sensor devices to provide their most recent measurements. As mentioned earlier, in some embodiments, at least one historic data of the previous measurements may also be provided as input data. In some embodiments, the historic data is used if no recent measurements have been performed by a certain sensor device or if the most recent data may become unavailable e.g. if no map data can be acquired at the current runtime of the neural network algorithm 100. In some embodiment, historic data below a predetermined time threshold may be provided, e.g. a maximum 1 second-old sensor data and/or map data may be provided.

The neural network algorithm 100 encodes each sensor and/or map data point comprised in each of the above-mentioned measurements and assigns a header timestamp to each encoded sensor and/or map data point. The header timestamp is assigned based on the respective time of capture for each data point tC9, tRa7, tL6, tIMU17 of each sensor measurement as well as the map data points tMap2 relative to the current runtime tRun7 of the neural network algorithm 100. This way the temporal characteristics of all the sensor data points are taken account for generating the prediction outputs 204a - 204n representative of the surrounding environment of the vehicle 1. It should also be noted that even though the above-mentioned example was explained with respect to single timestamps tC9, tRa7, tL6, tIMU17, the proposed systems and methods are equally powerful for multiple data points and timestamps per sensor modality. Most sensors do not capture all measurements at the same time. For instance, a rotating Lidar, may capture a single scan over its entire rotation cycle, which may be in the order of 100 ms. A camera sensor may similarly sweep over pixels, leading to a rolling shutter effect. By encoding these temporal characteristics into the obtained sensor data, the neural network algorithm 100 is enabled to learn to compensate for such effects. Since each sensor data point has an assigned timestamp, even half-cycle sensor data points captured in mid-sweeps of the sensor devices can be advantageously collected and provided to the neural network algorithm 100. This way, the neural network algorithm 100 may obtain the most recent measurements without idling and waiting for the full measurement cycle to be completed. It should also be clear to the skilled person that in some examples, multiple sensor data points obtained from similar and/or different sensor devices may have overlapping or even the same timestamps due to coincidence in capturing and recording their respective measurements. The explained advantage of operation in maximum frequency and without any imposed synchronization for these sensor devices still applies in spite of the concurrences in performing their measurements.

In several aspects and embodiments, the neural network algorithm may be a transformer neural network algorithm. A transformer neural network algorithm is a deep learning model that adopts the mechanisms such as cross-attention and self-attention. A cross-attention mechanism for instance enables a representation - such as a so-called query or an anchor-box - to efficiently gather information from sensor data.

Recently, transformer-based methods and neural networks have captured a noticeable amount of attention. A core component of transformer neural networks is that they can encode a position of each data point. For instance, a transformer processing images may encode the pixel positions on the image data and add this spatial information to the value of the encoded pixel.

In several embodiments and aspects, the at least one sensor-specific measurement may correspond to at least one captured image of the surrounding environment of the vehicle. Each encoded sensor data point of the at least one image may comprise a positional encoding. The neural network algorithm 100 e.g., a transformer neural network algorithm may be further configured for associating the header timestamp of each encoded sensor data point with the positional encoding of the encoded sensor data point.

The neural network algorithm 100 may be configured for constructing an understanding of the scenarios in the surrounding environment of the vehicle through a set of so-called queries. Typically, each query corresponds to a small spatial region in the image data representative of a spatial region in the surrounding environment of the vehicle 1, and learns to encode relevant information about that region. For object detection applications, this could be a bounding box, a class/existence confidence, or a velocity estimate. Depending on the desired task, it is also possible for these queries to encode road geometry, lane semantics, etc. The queries could span many possible spaces, but typical choices are a top-down bird's eye view, or the image plane. Each query may thus have an initial representation, which includes spatial information. When the query gathers information from an image, its spatial information is compared to the spatial information added to the image points. By additionally encoding the timestamps into these positional encodings, the neural network algorithm 100 provides a deeper understanding of the sensor data representative of the surrounding environment of the vehicle based on obtained asynchronous sensor data. The queries encode the time at which the perception algorithm runs, i.e. the runtime of the neural network algorithm 100 and each point in the input data encodes the time at which that sensor and/or map data point was collected. This provides the neural network algorithm 100 with the information on how stale the data may be, thus enabling it to account for the temporal effects of the collected data. This may advantageously be enabled by the transformer neural network architecture.

In some embodiments and aspects, a convolutional neural network (CNN), or a recurrent neural network (RNN), or a graph neural network (GNN) may be employed for receiving the asynchronous input data. In contrast to the transformer architecture, the CNN, RNN, or GNN have no positional encoding that can be used to incorporate temporal information. However, the information can be appended along the channel dimension or encoded and added to the deep feature vectors.

Thus, by the proposed methods and systems herein, the neural network algorithm is enabled to process data from multiple sensor devices without enforcing sensor synchronization. Furthermore, each sensor device is allowed to run at its maximum operational frequency, thereby providing more detailed information of the surrounding environment of the vehicle. Advantageously, improved sensor fusion performance in the case of non-synchronised sensors can be achieved and effects such as rolling shutter and Lidar rotation time can be compensated for.

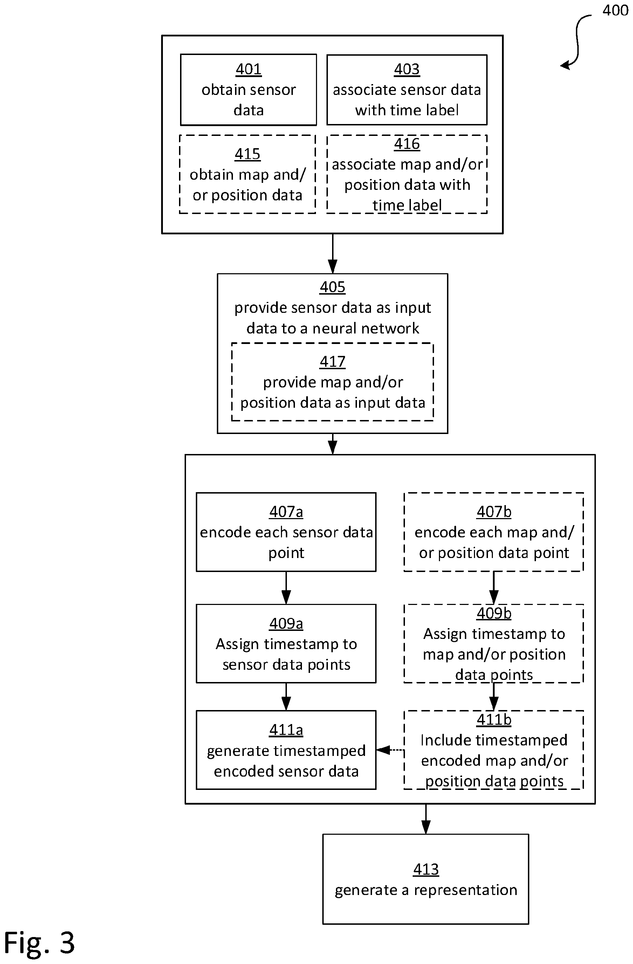

Fig. 3 shows a flowchart of a method **400** according to various aspects and embodiments of the present disclosure and with reference to the technology presented in Figs. 1 and 2. The computer-implemented method is presented for obtaining a representation of a surrounding environment of a vehicle. The method comprises obtaining **401** sensor data from a plurality of vehicle-mounted sensor devices 324a - 324n e.g. cameras, Lidar sensors, radar sensors, IMUs, etc. 324a- 324d. The sensor data of each sensor device comprises one or more sensor data points e.g., 200a1 - 200aj, 200b1- 200bj,...., 200n1- 200nj corresponding to at least one sensor-specific measurement performed by that sensor device at a respective operating frequency. The method further comprises associating **403** each sensor data point with a respective capture time label. Further, the method **400** comprises providing **405** the obtained sensor data as input data 200 to a neural network algorithm 100 at a runtime of the neural network algorithm. The neural network algorithm 100 is configured for encoding **407a** each sensor data point to a corresponding encoded sensor data point. Further, the neural network algorithm 100 is further configured for assigning **409a** a header timestamp to each encoded sensor data point, thus generating **411a** a timestamped encoded sensor data. The assigned header timestamp for a sensor data point is determined based on the capture time label of that sensor data point relative to a current runtime of the neural network algorithm at which the input data is provided to the neural network algorithm. The method **400** further comprises generating **413,** by means of the neural network algorithm 100 and based on the timestamped encoded sensor data, one or more prediction outputs 204a - 204n representative of the surrounding environment of the vehicle.

It shall be noted that all the embodiments, elements, features, examples and advantages described earlier with reference to the control system 10, or the processing circuitry 11 of the control system 10 and the neural network algorithm 100 in Figs. 1 - 2 also analogously and equally apply to various embodiments of the methods **400.**

In several embodiments, the plurality of vehicle-mounted sensor devices may comprise any one of at least one camera, at least one LIDAR, at least one radar, at least one accelerometer or gyroscope, at least one microphone, at least one Global Navigation Satellite System, GNSS, sensor, or at least one ultrasonic sensor.

In several embodiments, the respective operating frequency for each sensor device may be a maximum operating frequency of that sensor device and the capture time of at least one sensor data point of at least one sensor device of the plurality of sensor devices may be asynchronous with the capture time of at least one sensor data point of at least one other sensor device.

In several embodiments, the method **400** may further comprise obtaining **415** map data 308 associated with the surrounding environment of the vehicle 1 and/or positioning data indicative of a pose of the vehicle, the map and/or the positioning data comprising one or more map and/or positioning data points 110 respectively, wherein each map and/or positioning data point has a respective acquisition time label. In several embodiments, the method **400** further comprises associating the map and/or positioning data points with respective acquisition time labels.

The method **400** may further comprise providing **417** the obtained map and/or positioning data as input data 110 to the neural network algorithm at the runtime of the neural network algorithm 100. The neural network algorithm 100 may further be configured for encoding **407b** each map and/or positioning data point to a corresponding encoded map and/or positioning data point. The neural network algorithm 100 may further be configured for assigning **409b** a header timestamp to each encoded map and/or positioning data point, and further configured for including **411b** the encoded map and/or positioning data points having an assigned timestamp in the generated timestamped encoded sensor data. The timestamped encoded map and/or position data may in some embodiments be employed separately from the timestamped encoded sensor data.

In several embodiments, the at least one sensor-specific measurement may correspond to at least one captured image of the surrounding environment of the vehicle, wherein each encoded sensor data point of the at least one image may comprises a positional encoding. The neural network algorithm 100 may further be configured for associating **419** the header timestamp of each encoded sensor data point with the positional encoding of the encoded sensor data point.

In several embodiments, the neural network algorithm may comprise a transformer neural network algorithm.

Executable instructions for performing these functions and embodiments of the method **400** are, optionally, included in a non-transitory computer-readable storage medium or other computer program product configured for execution by one or more processors. As mentioned earlier, various aspects and embodiments of the presented technology, and the corresponding systems and methods may be implemented and executed by means of processing circuitry comprising one or more processors. The processing circuitry may at least partly be comprised in a control system 15b or apparatus 15b implemented in the data center 15 or server 15. In some embodiments and aspects, the control system 10 or apparatus 10 of the vehicle 1 may be configured to perform the action and functions described herein.

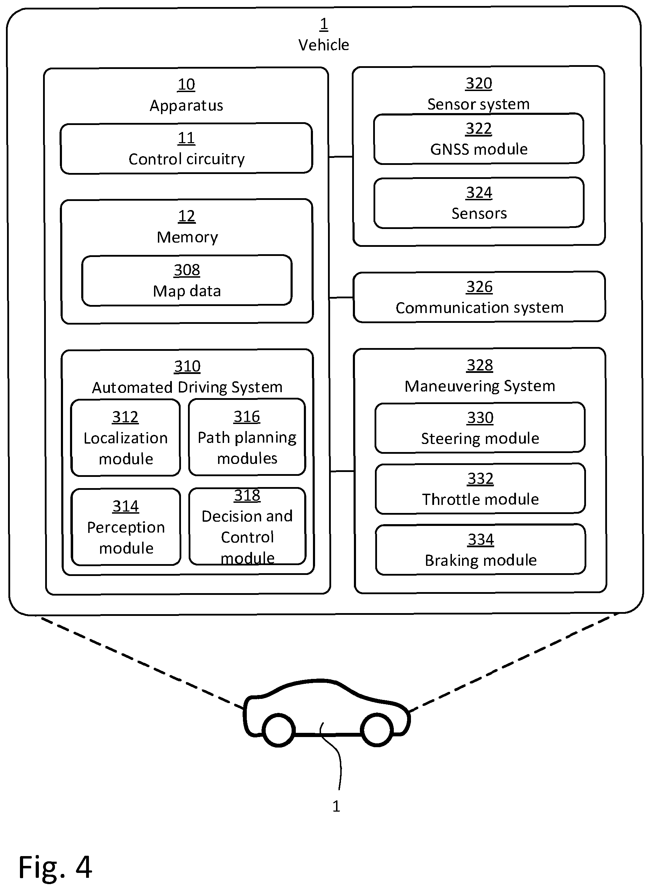

Fig. 4 is a schematic illustration of an ADS-equipped vehicle 1 comprising a control system 10, which may also be referred to as the control apparatus or device 10 or simply the apparatus 10. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the control system 10 may form a part of the ADS 310, i.e. the control system 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 4. Moreover, the vehicle 1 may comprise further elements than those shown in Fig. 4. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 4 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 328. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320. The ADS 310 may also comprise other modules such as a path planning module 316.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms *"*non-transitory computer-readable medium*"* or *"*tangible memory*"* are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

As previously mentioned, it should be appreciated that parts of the described solution may be implemented either in the vehicle 1, in a system located external the vehicle 1, or in a combination of internal and external the vehicle; for instance in a server 15 in communication with the vehicle, a so called cloud solution. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method for obtaining a representation of a surrounding environment of a vehicle, the method comprising:
obtaining sensor data from a plurality of vehicle-mounted sensor devices, the sensor data of each sensor device comprising one or more sensor data points corresponding to at least one sensor-specific measurement performed by that sensor device at a respective operating frequency;
associating each obtained sensor data point with a respective capture time label;
providing the obtained sensor data as input data to a neural network algorithm at a runtime of the neural network algorithm;
wherein the neural network algorithm is configured for encoding each sensor data point to a corresponding encoded sensor data point; and
wherein the neural network algorithm is further configured for assigning a header timestamp to each encoded sensor data point, thus generating a timestamped encoded sensor data;
the assigned header timestamp being determined based on the capture time label of that sensor data point relative to a current runtime of the neural network algorithm at which the input data is provided to the neural network algorithm;
generating, by means of the neural network algorithm and based on the timestamped encoded sensor data, one or more prediction outputs representative of the surrounding environment of the vehicle.

2. The method according to claim 1, wherein the respective operating frequency for each sensor device is a maximum operating frequency of that sensor device.

3. The method according to any one of claims 1 or 2, wherein the capture time of at least one sensor data point of at least one sensor device of the plurality of sensor devices is asynchronous with the capture time of at least one sensor data point of at least one other sensor device.

4. The method according to any one of the preceding claims, wherein the method further comprises:
obtaining map data associated with the surrounding environment of the vehicle and/or positioning data indicative of a pose of the vehicle, the map and/or the positioning data comprising one or more map and/or positioning data points respectively, wherein each map and/or positioning data point has a respective acquisition time label;
providing the obtained map and/or positioning data as input data to the neural network algorithm at the runtime of the neural network algorithm;
wherein the neural network algorithm is further configured for encoding each map and/or positioning data point to a corresponding encoded map and/or positioning data point; and
wherein the neural network algorithm is further configured for assigning a header timestamp to each encoded map and/or positioning data point, and further configured for including the encoded map and/or positioning data points having an assigned timestamp in the generated timestamped encoded sensor data.

5. The method according to any one of claims 1-4, wherein the at least one sensor-specific measurement corresponds to at least one captured image of the surrounding environment of the vehicle, and wherein each encoded sensor data point of the at least one image comprises a positional encoding, wherein the neural network algorithm is further configured for:
associating the header timestamp of each encoded sensor data point with the positional encoding of the encoded sensor data point.

6. The method according to any one of the preceding claims, wherein the plurality of vehicle-mounted sensor devices comprise any one of at least one camera, at least one LIDAR, at least one radar, at least one accelerometer or gyroscope, at least one microphone, at least one Global Navigation Satellite System, GNSS, sensor, or at least one ultrasonic sensor.

7. The method according to any one of the preceding claims, wherein the neural network algorithm comprises a transformer neural network algorithm.

8. A computer-readable storage medium comprising instructions which, when executed by one or more processors of a computing device of a vehicle comprising a plurality of vehicle-mounted sensor devices, causes the computing device to carry out the method according to any one of the preceding claims.

9. A computer program product comprising instructions which, when the program is executed by one or more processors of a computing device of a vehicle comprising a plurality of vehicle-mounted sensor devices, causes the computing device to carry out the method according to any one of claims 1- 7.

10. A system for obtaining a representation of a surrounding environment of a vehicle, the system comprising processing circuitry configured for:
obtaining sensor data from a plurality of vehicle-mounted sensor devices, the sensor data of each sensor device comprising one or more sensor data points corresponding to at least one sensor-specific measurement performed by that sensor device at a respective operating frequency;
associating each obtained sensor data point with a respective capture time label;
providing the obtained sensor data as input data to a neural network algorithm at a runtime of the neural network algorithm;
wherein the processing circuitry is further configured for, by means of the neural network algorithm, encoding each sensor data point to a corresponding encoded sensor data point; and
wherein the processing circuitry is further configured for, by means of the neural network algorithm, assigning a header timestamp to each encoded sensor data point, thus generating a timestamped encoded sensor data;
the assigned header timestamp being determined based on the capture time label of that sensor data point relative to a current runtime of the neural network algorithm at which the input data is provided to the neural network algorithm; wherein the processing circuitry is further configured for:
generating, by means of the neural network algorithm and based on the timestamped encoded sensor data, one or more prediction outputs representative of the surrounding environment of the vehicle.

11. The system according to claim 10, wherein the respective operating frequency for each sensor device is a maximum operating frequency of that sensor device.

12. The system according to any one of claims 10 or 11, wherein the capture time of at least one sensor data point of at least one sensor device of the plurality of sensor devices is asynchronous with the capture time of at least one sensor data point of at least one other sensor device.

13. The system according to any one of claims 10 - 12, wherein the processing circuitry is further configured for:
obtaining map data associated with the surrounding environment of the vehicle and/or positioning data indicative of a pose of the vehicle, the map and/or the positioning data comprising one or more map and/or positioning data points respectively, wherein each map and/or positioning data point has a respective acquisition time label;
providing the obtained map and/or positioning data as input data to the neural network algorithm at the runtime of the neural network algorithm;
wherein the processing circuitry is further configured for, by means of the neural network algorithm, encoding each map and/or positioning data point to a corresponding encoded map and/or positioning data point; and
wherein the processing circuitry is further configured for, by means of the neural network algorithm, for assigning a header timestamp to each encoded map and/or positioning data point, and further configured for including the encoded map and/or positioning data points having an assigned timestamp in the generated timestamped encoded sensor data.

14. The system according to any one of claims 10 - 13, wherein the at least one sensor-specific measurement corresponds to at least one captured image of the surrounding environment of the vehicle, and wherein each encoded sensor data point of the at least one image comprises a positional encoding, wherein the processing circuitry is further configured, by means of the neural network algorithm, for:
associating the header timestamp of each encoded sensor data point with the positional encoding of the encoded sensor data point.

15. A vehicle comprising:
one or more vehicle-mounted sensor devices configured to monitor a surrounding environment of the vehicle; and
a system according to any one of claims 10 - 14.
